# EUROPEAN PATENT APPLICATION

(11) **EP 4 800 397 A1**
(43) Date of publication of application: **02.09.2026**
(21) Application number: 26158419.7
(22) Date of filing: 13.02.2026
(51) Int. Cl.: G01P 13/02, B64D 43/02, G01P 21/02, G08G 5/21

(54) **METHOD, NON-TRANSITORY COMPUTER READABLE MEDIUM, AND AIRCFRAFT FOR THE DETERMINATION OF TRUE AIR SPEED FOR AN AIRCRAFT BASED ON AN ESTIMATED STATIC AIR TEMPERATURE DETERMINED WITHOUT TEMPERATURE SENSOR INPUT**

(30) Priority: 28.02.2025 US 202519066417
(71) Applicant: The Boeing Company, Arlington, VA 22202 (US)
(72) Inventor: MORROW, Jonathan C., 22202 ARLINGTON (US); JACKSON, Jamie L., 22202 ARLINGTON (US); THOMPSON, Sidney L., 22202 ARLINGTON (US)
(74) Representative: Plasseraud IP

(57) **Abstract**

An aircraft includes a plurality of sensors. The aircraft also includes a computer system. The computer system is configured to obtain an altitude of the aircraft based on first output of one or more sensors of the plurality of sensors. The computer system is configured to obtain aircraft speed of the aircraft based on second output of one or more sensors of the plurality of sensors. The computer system is configured to compute an estimated true airspeed for the aircraft based on a static temperature estimate, the altitude, and the aircraft speed. The computer system is also configured to provide the estimated true airspeed to one or more flight systems of the aircraft to enable control of the aircraft.

## Description

### FIELD OF THE DISCLOSURE

The present disclosure is generally related to determination of true air speed (TAS) for an aircraft based on an estimated static air temperature (e.g., outside air temperature) determined without temperature sensor input.

### BACKGROUND

Conventional aircraft include a sensor system that enables a computer system (e.g., one or more flight computers), gauges, or both, to present current flight conditions to one or more pilots of the aircraft. The sensor system includes pressure sensors to measure total pressure and static pressure, one or more temperature sensors (e.g., a total air temperature sensor to measure a temperature of freestream air during flight), one or more angle-of-attack sensors, sensors of an inertial navigation system, other sensors, and combinations thereof. The current flight conditions include the airspeed of the aircraft, presented to the pilot(s) as indicated airspeed (IAS); a calibrated airspeed (CAS), which is the IAS corrected for instrument errors and position errors (e.g., static air pressure corrections); equivalent airspeed (EAS), which is the CAS corrected for the compressibility of air; TAS, which is the CAS corrected for altitude and temperature; Mach number or corrected Mach number, which is the ratio of the TAS to the speed of sound in air at the flight altitude, or combinations thereof.

During a flight of the aircraft, loss of temperature input from the one or more total air temperature sensors results in loss of ability to determine the TAS. Loss of the TAS may result in loss, or performance degradation, of some aircraft functionality. Aircraft systems that can be rendered inoperative, or be adversely affected, by loss of temperature input include a flight management system, an inertial reference unit (e.g., degraded wind information), an autothrottle system, an autopilot system, an airborne weather radar system, a ground proximity warning system (e.g., degraded reactive windshear information), flight controls, and displays. Although conventional flight crew training and system redundancies provide for safe flight and landing of the aircraft under such circumstances, it is nonetheless desirable to mitigate, or avoid, such loss or performance degradation of aircraft functionality during flight without temperature sensor input for improved aircraft performance.

### SUMMARY

This disclosure relates to methods as per the appended claims, non-transitory computer-readable mediums as per the appended claims, and aircrafts as per the appended claims.

The features, functions, and advantages described herein can be achieved independently in various implementations or may be combined in yet other implementations, further details of which can be found with reference to the following description and drawings.

### BRIEF DESCRIPTION OF THE DRAWINGS

FIG. 1 depicts a block diagram of an aircraft configured to determine TAS based on an estimated static air temperature determined without temperature sensor input.
FIG. 2 depicts a flow chart of a first method of operation of a computer system of an aircraft to determine TAS based on an estimated static air temperature determined without temperature sensor input.
FIG. 3 is a graphical representation of a base model used to determine an estimated static air temperature without temperature sensor input.
FIG. 4 is a graphical representation of a first linear model used to determine an estimated static air temperature without temperature sensor input.
FIG. 5 is a graphical representation of a plurality of linear models used to determine an estimated static air temperature without temperature sensor input.
FIG. 6 depicts a flow chart of a second method of operation of a computer system of an aircraft to determine TAS based on an estimated static air temperature determined without temperature sensor input.
FIG. 7 depicts a flow chart of a third method of operation of a computer system of an aircraft to determine TAS based on an estimated static air temperature determined without temperature sensor input.
FIG. 8 depicts a flow chart illustrating a life cycle of an aircraft.
FIG. 9 is a block diagram of a computing environment including a computing device configured to support aspects of computer-implemented methods and computer-executable program instructions (or code) according to the present disclosure to determine TAS for an aircraft based on an estimated static air temperature determined without temperature sensor input.

### DETAILED DESCRIPTION

The present disclosure describes determining an estimated static air temperature for an aircraft without temperature sensor input. Provision of the estimated static air temperature enables the computer system of the aircraft to perform temperature-dependent computations in the event of loss of temperature sensor input. The estimated static air temperature may be used when temperature sensor input is lost or when a unit that receives the temperature sensor input (e.g., a primary air data system) becomes inoperative. Temperature sensor input loss may occur due to impact (e.g., bird strike), temperature transducer failure, power loss, maintenance error, other causes, or combinations thereof.

An accuracy of the estimated static air temperature is sufficient to allow determination of one or more flight conditions with a desired degree of accuracy (e.g., an estimated TAS that is within plus or minus ten percent of the TAS determined using temperature sensor input). When the aircraft uses the estimated static air temperature, display of output based on the estimated static air temperature (e.g., the static air temperature and the TAS) can be modified (e.g., highlighted, displayed in a particular color, etc.) to indicate that the output is an estimate.

Regulations require continued safe flight and landing (CSFL) of an aircraft without exceptional pilot skills or pilot strength following a single-point failure in any flight control related system of the aircraft. Modern aircraft include primary air data systems for each pilot of the aircraft, which are flight control related systems. A primary air data system receives input from sensors (e.g., a total pressure sensor, a static pressure sensor, and an angle-of-attack (AOA) sensor) of a sensor system to provide first information concerning aircraft flight conditions considered necessary for CSFL (e.g., altitude, IAS, and AOA). The primary air data system(s) also receive input from one or more other sensors (e.g., a total air temperature sensor) of the sensor system to provide second information concerning one or more aircraft flight conditions that is not considered necessary for CSFL but can be used as a basis for controlling the aircraft (e.g., TAS).

In the event of failure of the primary air data system(s), one or more standby air data systems provide the information concerning aircraft flight conditions considered necessary for CSFL. In keeping with design philosophies of independence and simplicity, standard standby air data system(s) receive power from a source other than a source that provides power to the primary air data systems, and the standby air data system(s) only receive inputs necessary to provide the information concerning aircraft flight conditions considered necessary for CSFL.

Normally, TAS is not considered necessary for CSFL, but TAS may be considered to be necessary for CSFL beginning at some time in the future due to increased reliance of pilots on functionality that would not be present or would be adversely affected by the loss of temperature sensor input. Stress and increased workload on pilots can be reduced by determining the estimated static air temperature to limit functionality loss of the aircraft should total air temperature sensor(s) or primary air data systems fail.

A technical advantage of being able to determine and use an estimated static air temperature is that loss of temperature sensor input does not result in the loss of aircraft functionality (e.g., loss of functionality of the autopilot system and the autothrottle system). Maintaining aircraft functionality reduces stress and workload on pilots in the event of loss of the temperature sensor input or in the event of primary air data system failure.

The figures and the following description illustrate specific implementations. It will be appreciated that those skilled in the art will be able to devise various arrangements that, although not explicitly described or shown herein, embody the principles described herein and are included within the scope of the claims that follow this description. Furthermore, any examples described herein are intended to aid in understanding the principles of the disclosure and are to be construed as being without limitation. As a result, this disclosure is not limited to the specific embodiments or examples described below, but by the claims and their equivalents.

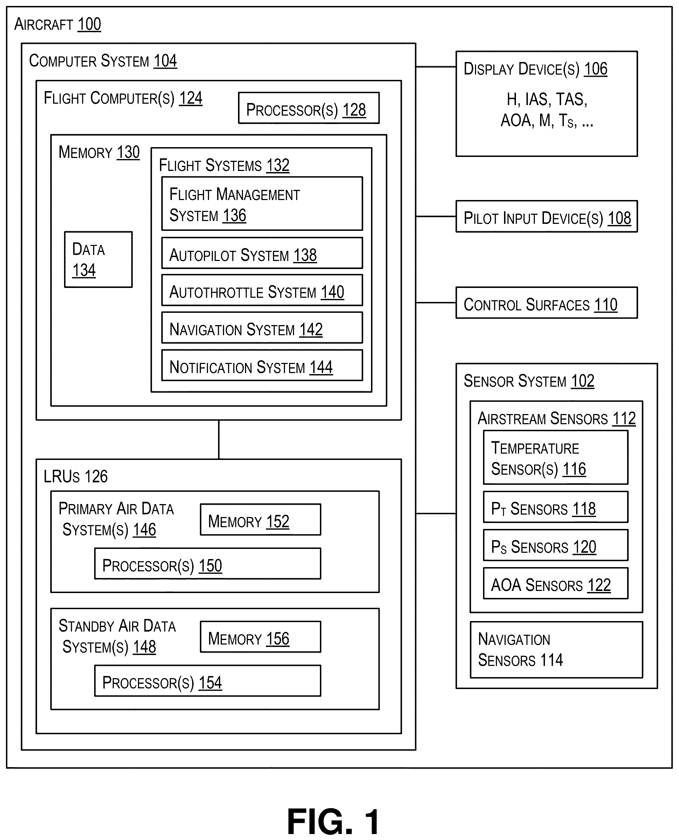

Particular implementations are described herein with reference to the drawings. In the description, common features are designated by common reference numbers throughout the drawings. As used herein, various terminology is used for the purpose of describing particular implementations only and is not intended to be limiting. For example, the singular forms "a," "an," and "the" are intended to include the plural forms as well, unless the context clearly indicates otherwise. Further, some features described herein are singular in some implementations and plural in other implementations. To illustrate, FIG. 1 depicts an aircraft 100 including one or more standby air data systems 148, which indicates that in some implementations the aircraft 100 includes a single standby air data system 148 and in other implementations the aircraft 100 includes multiple standby air data systems 148. For ease of reference herein, such features are generally introduced as "one or more features" where the description of the feature is used in place of "features" (e.g., standby air data systems) and subsequently referred to using "feature(s)" where the description of the feature is used in place of the feature (e.g., standby air data system(s)), unless a specific singular or plural feature is intended.

The terms "comprise," "comprises," and "comprising" are used interchangeably with "include," "includes," or "including." Additionally, the term "wherein" is used interchangeably with the term "where." As used herein, "exemplary" indicates an example, an implementation, and/or an aspect, and should not be construed as limiting or as indicating a preference or a preferred implementation. As used herein, an ordinal term (e.g., "first," "second," "third," etc.) used to modify an element, such as a structure, a component, an operation, etc., does not by itself indicate any priority or order of the element with respect to another element, but rather merely distinguishes the element from another element having a same name (but for use of the ordinal term). As used herein, the term "set" refers to a grouping of one or more elements, and the term "plurality" refers to multiple elements. As used herein, A "and/or" B may mean that either "A and B", or "A or B", or both "A and B" and "A or B" are applicable or acceptable.

As used herein, "obtaining," "generating," "calculating," "using," "selecting," "accessing," and "determining" are interchangeable unless context indicates otherwise. For example, "obtaining," "generating," "calculating," or "determining" a parameter (or a signal) can refer to actively generating, calculating, or determining the parameter (or the signal) or can refer to using, selecting, or accessing the parameter (or signal) that is already generated, such as by another component or device. As used herein, "coupled" can include "communicatively coupled," "electrically coupled," or "physically coupled," and can also (or alternatively) include any combinations thereof. Two devices (or components) can be coupled (e.g., communicatively coupled, electrically coupled, or physically coupled) directly or indirectly via one or more other devices, components, wires, buses, networks (e.g., a wired network, a wireless network, or a combination thereof), etc. Two devices (or components) that are electrically coupled can be included in the same device or in different devices and can be connected via electronics, one or more connectors, or inductive coupling, as illustrative, non-limiting examples. In some implementations, two devices (or components) that are communicatively coupled, such as in electrical communication, can send and receive electrical signals (digital signals or analog signals) directly or indirectly, such as via one or more wires, buses, networks, etc. As used herein, "directly coupled" is used to describe two devices that are coupled (e.g., communicatively coupled, electrically coupled, or physically coupled) without intervening components.

FIG. 1 depicts a block diagram of an aircraft 100 configured to provide an estimated static air temperature responsive to a loss of temperature sensor input. Particular features of the aircraft 100 are annotated in FIG. 1. It should be understood that the aircraft 100 includes many additional features (e.g., landing gear, engines, communication systems, etc.) common to private, commercial, or military aircraft, even though such features are not annotated in FIG. 1. The aircraft 100 may be piloted by one or more pilots aboard the aircraft 100, may be remotely controlled by one or more pilots, may be an autonomous aircraft, or combinations thereof. The aircraft 100 may be a fixed-wing craft, a rotary wing craft, or a hybrid aircraft.

The aircraft 100 includes a sensor system 102, a computer system 104, one or more display device(s) 106, pilot input devices 108 (e.g., engine throttles, pedals, a control column), and control surfaces 110 (e.g., ailerons, elevators, and a rudder). The sensor system 102 includes airstream sensors 112, navigation sensors 114 (e.g., gyroscopes, accelerometers, magnetometers, or combinations thereof, of one or more inertial reference units (IRUs), global positioning system (GPS) receivers, etc.), and other sensors (e.g., landing gear position sensors, fuel level sensors, etc.).

The airstream sensors 112 include one or more total air temperature sensors 116 configured to indicate air temperature (e.g., total air temperature), total pressure (P_{T}) sensors 118 (e.g., pitot tubes) configured to measure combined dynamic pressure and static pressure, static pressure (P_{S}) sensors 120 configured to measure static pressure, and one or more AOA sensors 122 configured to indicate a local AOA. The airstream sensors 112 include transducers that provide output of the airstream sensors 112 as electrical signals to the computer system 104.

The computer system 104 includes one or more flight computers 124 and line-replaceable units (LRUs) 126 communicatively coupled to the flight computer(s) 124 via a data bus. Each of the flight computer(s) 124 includes one or more processors 128 and memory 130. The memory 130 includes flight systems 132 and data 134 used and generated by the processor(s) 128. The flight systems 132 are instructions executable by the one or more processors 128 to facilitate operation and use of the aircraft 100. The flight systems 132 include a flight management system 136 to determine and display flight conditions, an autopilot system 138, an autothrottle system 140, a navigation system 142 to process input received from the navigation sensors 114, a notification system 144 to monitor functionality of the aircraft 100 and provide alerts regarding abnormal conditions, other systems, and combinations thereof.

The LRUs 126 are designed to handle particular tasks. The LRUs 126 include one or more primary air data systems 146 (e.g., one for each pilot of the aircraft 100), one or more standby air data systems 148, and a plurality of other LRUs. Each of the primary air data system(s) 146 includes one or more processors 150 and memory 152. The memory 152 includes instructions executable by the one or more processors 150 to process input data to generate flight condition information provided to the flight computer(s) 124 and data used by and generated by the processor(s) 150. The data includes output generated by the one or more processors 150, one or more tables that include particular data used by the one or more processor(s) 150 to determine the output, and other information.

In some implementations, each primary air data system 146 receives input from the navigation system 142, input from a dedicated P_{T} sensor 118, static pressure input, input from a dedicated AOA sensor 122, and, if there are multiple total air temperature sensors 116, input from a dedicated total air temperature sensor 116. In an implementation, each primary air data system 146 receives input from a dedicated P_{S} sensor 120 and modifies the input from the P_{S} sensor 120 to generate a corrected static pressure that accounts for position errors and other factors. In other implementations, output of the P_{S} sensors 120 are provided to the flight computers 124, or another LRU 126, and the output is processed to determine a corrected static pressure that is provided to each of the primary air data systems 146, the standby air data system(s) 148, or both. A unit that receives input from a P_{S} sensor 120 includes data associated with position errors under different flight conditions for the P_{S} sensor 120 to enable correction of the input in real time to corrected static pressure.

Each primary air data system 146 processes input to generate flight condition information that is provided as the output to the flight computer(s) 124. The flight condition information includes the altitude, the indicated airspeed, altitude rate, static air temperature, TAS, Mach number, angle of attack, other information, or combinations thereof. In some implementations, the primary air data system(s) 146 include the functionality of an inertial reference system to enable the primary air data system(s) 146 (e.g., an air data and inertial reference system) to determine and provide to the flight computer(s) 124 additional information. The additional information includes wind direction and speed, groundspeed, wind correction angle, other information, or combinations thereof.

The standby air data system(s) 148 are utilized by the aircraft 100 in the event of failure of the primary air data system(s) 146. Each standby air data system(s) 148 includes one or more processors 154 and memory 156. The memory 156 includes instructions executable by the processor(s) 154 to process input data to generate flight condition information provided to the flight computer(s) 124 and data used by and generated by the processor(s) 154. The data includes output generated by the one or more processor(s) 154, one or more tables that include particular data used by the one or more processor(s) 154 to determine the output, and other information.

In some implementations, standby air data system(s) 148 only receive inputs necessary to provide output of flight conditions considered necessary for CSFL. Because flight conditions determined based on input from the total air temperature sensors 116 (e.g., TAS) are not currently considered necessary for CSFL, the standby air data system(s) 148 may not include input from the total air temperature sensor(s) 116. In some implementations, standby air data system(s) 148 are configured to receive position and time information from the navigation system 142, and in other implementations, the standby air data system(s) 148 are not configured to receive position and time information from the navigation system 142. If flight conditions determined based on the temperature sensor input should subsequently be considered necessary for CSFL, the standby air data system(s) 148 may be implemented as one or more additional primary air data systems 146 and receive temperature sensor input, navigation system input, or both.

The primary air data system(s) 146 and the standby air data system(s) 148 are in communication with each other via the computer system 104. The notification system 144 of the flight computer(s) 124 implements instructions to validate the input data supplied to the primary air data system(s) 146 and the standby air data system(s) 148 based on validation rules. If one or more of the validation rules fails, the notification system 144 alerts the pilots, implements a corrective action (e.g., switches from a primary air data system 146 to a standby air data system 148 associated with the primary air data system 146 when the failed validation rule(s) indicate failure of the primary air data system 146, send a signal to a primary air data system 146 to determine and use the estimated static air temperature when the failed validation rule(s) indicate failure of the total air temperature sensor 116 that provides input to the primary air data system 146, etc.), or both.

During normal operation of the aircraft 100, the primary air data system(s) 146 are used to process sensor data from the airstream sensors 112 and provide flight condition information to the flight computer(s) 124. The flight condition information includes the static air temperature and the TAS determined based on temperature sensor input from the total air temperature sensor(s) 116 and the Mach number.

During abnormal operation of the aircraft 100 that prevents the use of the temperature sensor input from the total air temperature sensor(s) 116, the primary air data system(s) 146 or the standby air data system(s) 148 provide flight condition information to the flight computer(s) 124 that includes an estimated static air temperature and an estimated TAS based on the estimated static air temperature. For example, the aircraft can be controlled by the flight computers according to a reliable estimation of true air speed, even in the event of abnormal operation that prevents the use of temperature sensor input. Thus, the aircraft can be controlled without loss, or performance degradation, of aircraft functionality even in the case of such abnormal operation. Abnormal operation of the aircraft 100 that prevents the use of the temperature sensor input can occur due to failure of the total air temperature sensor(s) 116, communication loss with the total air temperature sensor(s) 116 (e.g., wire fault or aircraft network disruption), or both, which results in the primary air data system(s) 146 determining the estimated static air temperature. Abnormal operation of the aircraft 100 that prevents the use of the temperature sensor input can also occur due to failure of the primary air data system(s) 146. Failure of a primary air data system 146 automatically results in the pilot associated with the failed primary air data system 146 receiving flight condition information from a standby air data system 148 associated with the pilot. In some implementations for aircraft 100 that include a first primary air data system 146 for a pilot and a second primary air data system 146 for a copilot, the pilots can set a control of the aircraft 100 so that both pilots utilize flight condition information produced by a functioning primary air data system 146 when one of the two primary air data systems 146 fails.

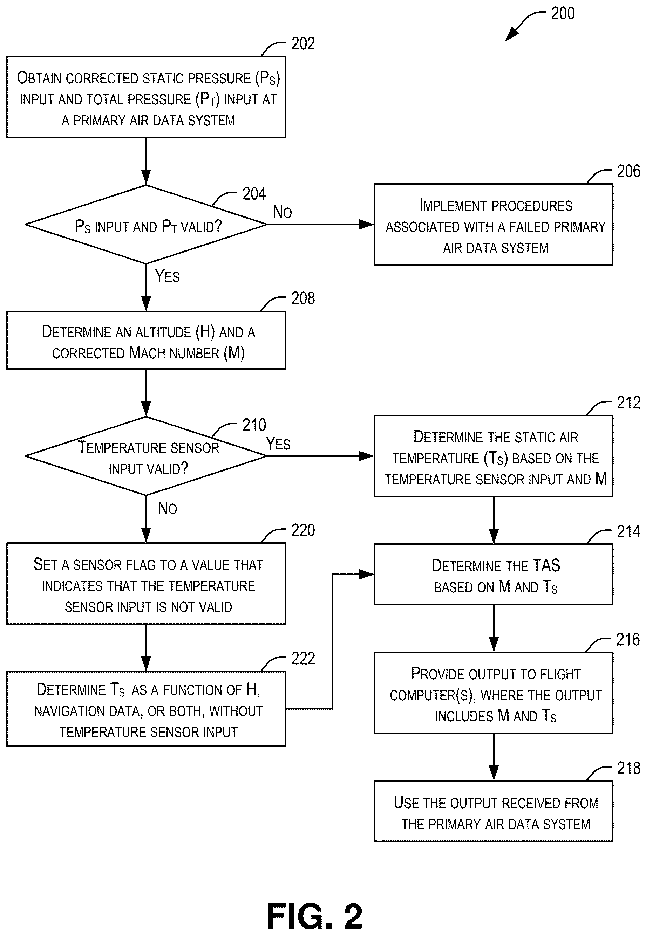

FIG. 2 depicts a flowchart of first method 200 of operation of a computer system of an aircraft to determine estimated static air temperature without temperature sensor input. In some implementations, the computer system 104 of FIG. 1 performs the method 200. The method 200, at block 202, includes obtaining corrected static pressure input and total pressure input at a primary air data system. For example, a first primary air data system 146 receives total pressure input from a P_{T} sensor 118 of airstream sensors 112 of a sensor system 102 and determines a corrected static pressure from static pressure input from a P_{S} sensor 120 of the airstream sensors 112.

The method 200, at block 204, includes determining that the corrected static pressure input and the total pressure input are valid. For example, the notification system 144 of the flight computer(s) 124 samples the corrected static pressure inputs and the total pressure inputs at the primary air data system(s) 146 and the standby air data system(s) 148 and applies validation rules to determine if values of samples based on corresponding recent values of the samples, discrepancies among the samples, or both, indicate violation of one or more validation rules. When the determination, at block 204, is that corrected static pressure input or the total pressure input are not valid, the method 200, at block 206, includes implementing procedures associated with a failed primary air data system. For example, the computer system 104 determines (e.g., automatically or based on pilot input) that the first primary air data system 146 is associated with the violation of the validation rule(s), a primary fault flag associated with the first primary air data system 146 is set to a value that indicates a failed primary air data system, the first primary air data system 146 is shut down, repair of the aircraft 100 is scheduled, or combinations thereof. The primary fault flag is utilized by the notification system 144 to prevent subsequent validations of corrected static pressures and total pressures from considering values from the first primary air data system 146.

When the determination, at block 204 is that corrected static pressure input or the total pressure input are valid, the method 200, at block 208, includes determining an altitude (H) and a corrected Mach number (M) based on the total pressure input and the corrected static pressure input. For example, the first primary air data system 146 calculates the altitude based on an appropriate altitude equation using the corrected static pressure input and a corrected Mach number using an appropriate equation for a speed regime of the aircraft 100 (e.g., subsonic or supersonic) using the corrected static pressure input and the total pressure input.

The method 200, at block 210, includes determining that temperature sensor input to the primary air data system is valid. For example, the notification system 144 samples temperature sensor input from the primary air data system(s) 146, applies validation rules to determine if the temperature sensor input based on recent temperature input, discrepancies among the temperature sensor inputs, or both, indicate violation of one or more validation rules.

When the determination, at block 210, is that the temperature sensor input is valid, the method 200, at block 212, includes determining the static air temperature (T_{S}) based on the temperature sensor input and the corrected Mach number. For example, the first primary air data system 146 determines the static air temperature based on the corrected Mach number and the temperature input using an appropriate equation (e.g., T_{S} = T_{T}/(1+0.2M²). The first primary air data system 146 also allows a sensor flag associated with the first primary air data system 146 to remain at a value that indicates that the air temperature input is valid. The method 200, at block 214, includes determining the TAS based on the corrected Mach number and the static air temperature. For example, the first primary air data system 146 calculates the TAS using an appropriate equation for the TAS based on the corrected Mach number. The method 200, at block 216, includes providing output to flight computer(s), where the output includes the corrected Mach number and the static air temperature. For example, the first primary air data system 146 provides output to the flight computer(s) 124, which includes the corrected Mach number, the altitude, the static air temperature, the TAS, the sensor flag, and other data generated by the first primary air data system 146.

The method 200, at block 218, includes using the output received from the primary air data system. For example, a particular flight computer 124 receives the output from the first primary air data system 146, provides the output to the flight systems 132 to allow the flight management system 136 to present flight condition data to the pilot(s) via one or more of the display device(s) 106 (e.g., the altitude (H), the IAS, the TAS, the AOA, the Mach number (M), the static air temperature (T_{S}), other information, or combinations thereof), allows other flight systems 132 (e.g., the autopilot system 138 or the autothrottle system 140) to control operation of the aircraft 100, or both. Presentation of the output may be adjusted (e.g., emphasized by change of one or more display characteristics, presented with an associated legend, etc.) when the sensor flag indicates that the temperature sensor input is not valid, as described further below, to indicate that output based on static air temperature is based on an estimated static air temperature rather than a value determined from temperature input from one of the total air temperature sensor(s) 116. The method 200 repeats for newly obtained corrected static pressure input and total pressure input, and the method 200 is performed for each primary air data system 146.

When the determination, at block 210, is that the temperature sensor input is not valid, the method 200, at block 220, includes setting the sensor flag to a value that indicates that the temperature input is not valid. For example, the first primary air data system 146 changes the sensor flag from zero to one. The method 200, at block 222, includes determining the static air temperature as a function of the altitude, navigation data, or both, without temperature sensor input as explained further below. The method 200, after block 222, includes proceeding to block 214 to determine the TAS based on the corrected Mach number and the static air temperature.

Static air temperature is a function of altitude and current conditions affecting heat transfer (e.g., wind, humidity, time of day, etc.). The current conditions affecting heat transfer occur in the troposphere from the earth surface to the tropopause (i.e., the interface between the troposphere and the stratosphere where a start of an isotherm occurs). The altitude of the tropopause varies between about 10 to 12 miles at the equator to about 6 miles at the poles.

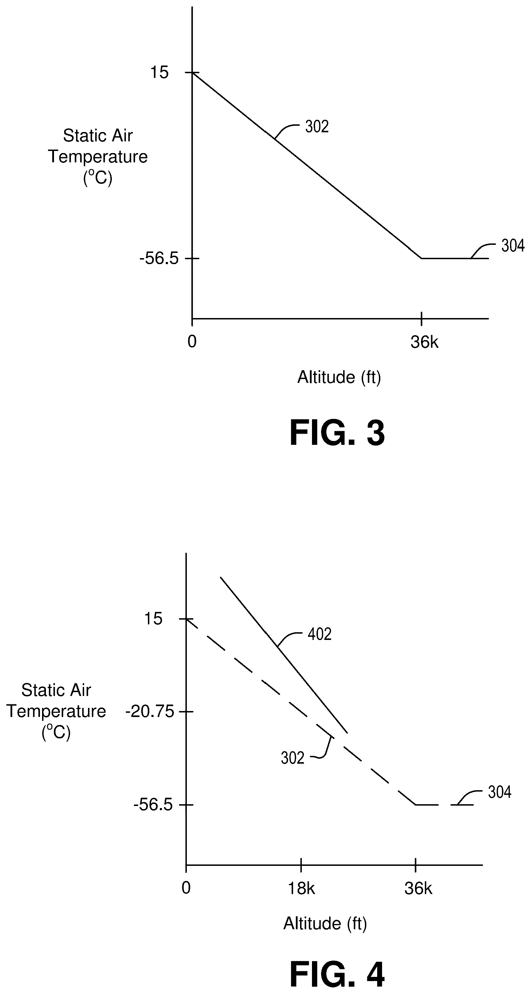

The static air temperature is primarily used to determine the TAS. For low airspeeds and altitudes, the TAS is determined based on the total pressure; and for high speeds, the TAS is directly proportional to the corrected Mach number multiplied by the square root of the absolute static air temperature divided by the absolute standard temperature (i.e., 288.15 K). When a reasonable estimate of static air temperature is used to determine the TAS, the square root function results in small errors when compared to use of actual static air temperatures, which enables use of one or more linear equations to model the static air temperature in the troposphere when measured static air temperature provided by the total air temperature sensor(s) 116 is not available. According to an aspect, a base model for the static air temperature is based on worldwide surface temperature averages and average height of the tropopause. The base model is depicted graphically as FIG. 3. Referring to FIG. 3, the base model is illustrated as a first line 302 up to 36k feet and a second line 304 above 36k feet. The primary air data system(s) 146 and the standby air data system(s) 148 use a first linear equation (e.g., in the form *T_{S} = mH + b)* for the line 302 in the troposphere and a second linear equation (e.g., *T_{S} = -56.5* degrees C) for the second line 304. The temperature remains at -56.5 degrees C until the altitude is about 72,000 feet. Most aircraft 100 have an operating ceiling height that is below 72,000 feet, but for an aircraft 100 with an operating ceiling height above 72,000 feet and below about 180,000 feet (i.e., the transition to the mesosphere), the primary air data system(s) 146 and the standby air data system(s) 148 can include instructions to generate estimated static air temperatures that compensate for the rise of temperature with increasing altitude in this region of the atmosphere.

In some implementations, a more accurate estimation of the static air temperature is provided by modification of the base model based on one or more estimates of conditions at particular locations associated with the aircraft 100. In a first particular implementation, a correction is added to the static air temperature generated by the primary air data system 146, or the standby air data system(s) 148 using the base model of FIG. 3. The correction is based on position, time, altitude, or combinations thereof. A value of the correction is retrieved from a table applicable for the position, time, and altitude of the aircraft 100. The tables are stored in the primary air data system(s) 146 and in the standby air data system(s) 148 when the standby air data system(s) 148 are configured to receive position and time input from the navigation system 142. Each table is associated with a particular time span (e.g., a month, season, or some other time span) and a particular height range (e.g., less than 5,000 feet, between 5,000 feet and 9,000 feet, etc.). Each table includes incremental latitude and longitude values for the earth. As an example, Table 1 depicts a portion of a table for July and an altitude below 5,000 feet, where the first column is latitude values, the second column is longitude values, and the third column is the correction to be added to the static air temperature generated by the equation that models line 302 for the altitude. Linear interpolation, or another estimation technique, may be used to determine the correction when the position is between latitude values, longitude values, or both, presented in the appropriate table. The primary air data system(s) 146 and applicable standby air data system(s) 148 would use the correction corresponding to the nearest latitude and longitude and would have one or more rules to handle cases where the latitude, longitude, or both, are equidistant from values in the table. Both the equation for line 302 and the values in the table can be updated to reflect changes due to climate change (e.g., a new average surface temperature different than 15 degrees C, a different average troposphere height, or both).

| Latitude | Longitude | Correction |
|---|---|---|
| 47.5 | 347.5 | -0.06 |
| 47.5 | 352.5 | 0.03 |
| 47.5 | 357.5 | 0.21 |
| 52.5 | 2.5 | 0.22 |
| 52.5 | 7.5 | 0.34 |
| 52.5 | 12.5 | 0.55 |
| Table 1 | | |

In a second particular implementation, a linear model for the static air temperature in the troposphere is based on historical data rather than worldwide averages. Points on a line modeling static air temperature are based on an elevation and a historical average temperature associated with the present time (e.g., season, month, time of day, or combinations thereof) at a particular location near the aircraft 100 (e.g., an airport near to the location of the aircraft 100), an altitude and static air temperature at a time when the total air temperature sensor(s) 116 still provided valid temperature input, an average elevation of the tropopause at the location near the aircraft 100 associated with the present time, or combinations thereof. For example, if the aircraft 100 is near to, and descending toward, the airport in Denver, Colorado in the month of July, and a last valid static temperature based on temperature sensor input from the total air temperature sensor(s) 116 was -7 degrees C at an elevation of 18k feet, the primary air data system 146 accesses data for the Denver airport from the memory 152 and retrieves the elevation of the airport and an average temperature at a corresponding time of day (e.g., 4 p.m.) in the month of July) to generate and use an equation corresponding to line 402 depicted in FIG. 4 to model the static air temperature in the troposphere near the Denver airport, as opposed to using an equation corresponding to the line 302 of the model based on world average temperatures. The memory 152 stores data for a plurality of locations (e.g., airports). Updates to the data stored in the memory 152 may be made when new data becomes available to be able to compensate for changes to average temperatures and average tropopause altitudes due to climate changes or other reasons.

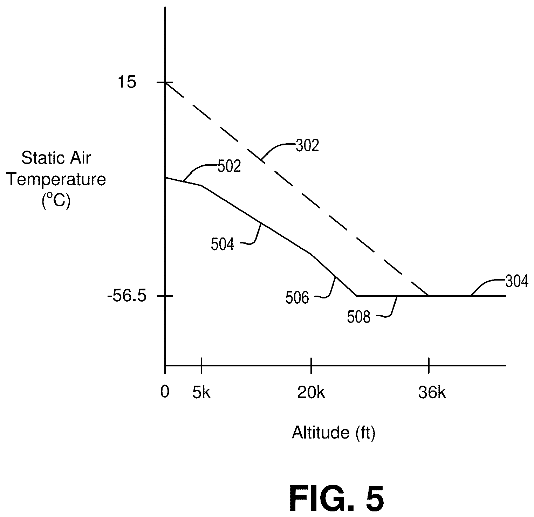

In some implementations of the second particular implementation, the model for the static air temperature in the troposphere near the particular location is made of two or more line segments associated with different altitudes instead of using a single line to model all of the troposphere. FIG. 5 depicts a model for temperature versus altitude associated with a particular location and time (e.g., the Juneau, Alaska airport during late Winter or early Spring). The primary air data system 146 accesses data for the Juneau airport from an appropriate table in the memory 152. The data allows generation of equations for lines segments corresponding to static air temperatures for particular altitude ranges (e.g., line 502 for altitudes between 0 ft and 5k ft, line 504 for altitudes between 5k ft and 20k ft, line 506 for altitudes between 20k feet and the altitude of the tropopause, and line 508 for altitudes above the troposphere and below an operating ceiling of the aircraft 100). In use, data corresponding to one or more applicable regions would be used to generate equations for line segments used to determine static air temperatures. For example, if the aircraft 100 is already above 5,000 ft and climbing, the particular equation for line segment 502 would not be used and would not be generated. The equations for lines 502-508 can be used to provide a more accurate estimation of the static air temperature for a given altitude than the equation of the line 302 based on the world average temperatures, or a single linear equation that models all of the troposphere (e.g., line 402 depicted in FIG. 4). For different airports or locations, the data stored in the memory 152 could provide information for a different number of altitude ranges, different altitude ranges, or both.

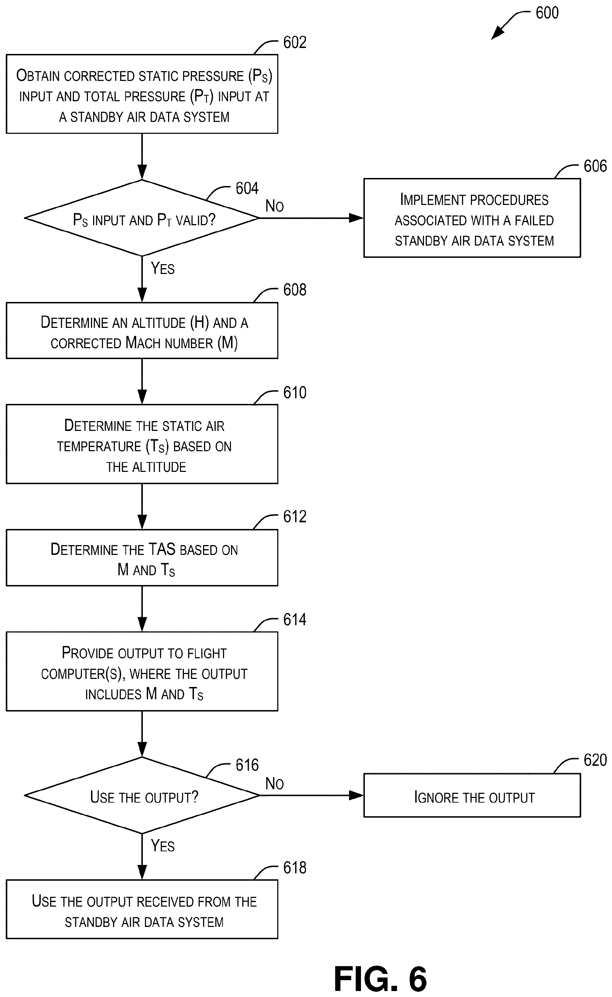

FIG. 6 depicts a flowchart of a method 600 of a computer system using a standby air data system to determine an estimated static air temperature and an estimated TAS. In some implementations, the computer system 104 of FIG. 1 performs the method 600. The method 600, at block 602, includes obtaining corrected static pressure input and total pressure input at a standby air data system. For example, a first standby air data system 148 receives total pressure input from a P_{T} sensor 118 of airstream sensors 112 of a sensor system 102 and determines a corrected static pressure from static pressure input from a Ps sensor 120 of the airstream sensors 112.

The method 600, at block 604, includes determining that the corrected static pressure input and the total pressure input are valid. For example, the notification system 144 of the flight computer(s) 124 samples the corrected static pressure inputs and the total pressure inputs at the primary air data system(s) 146 and the standby air data system(s) 148 and applies validation rules to determine if values of samples based on corresponding recent values of the samples, discrepancies among the samples, or both, indicate violation of one or more validation rules. When the determination, at block 606, is that corrected static pressure input or the total pressure input are not valid, the method 600, at block 608, includes implementing procedures associated with a failed standby air data system. For example, the notification system 144 determines (e.g., automatically or based on pilot input) that the first standby air data system 148 is associated with the violation of the validation rule(s), a standby fault flag associated with the first standby air data system 148 is set to a value that indicates a failed standby air data system, the notification system 144 causes the computer system 104 to implement emergency procedures to determine flight condition information to provide to the pilots, schedules repair of the aircraft 100, notifies the pilot(s) to land the aircraft 100, or combinations thereof. The standby fault flag is utilized by the notification system 144 to prevent subsequent validations of corrected Mach numbers and altitudes from considering values from the first standby air data system 148.

When the determination, at block 604, is that corrected static pressure input or the total pressure input are valid, the method 600, at block 608 includes determining the altitude (H) based on corrected static pressure input and determining a corrected Mach number (M). For example, the first standby air data system 148 calculates the altitude based on an appropriate altitude equation using the corrected static pressure input and a corrected Mach number using an appropriate equation for a speed regime of the aircraft 100 (e.g., subsonic or supersonic) and based on the corrected static pressure input and the total pressure input.

The method 600, at block 610, includes determining the static air temperature based on the altitude. For example, when the first standby air data system 148 does not receive input from the navigation system 142, the first standby air data system 148 determines the linear equations of lines 302, 304 associated with the base model of static air temperature described above with respect to FIG. 3 based on data in the memory 156, and determines the static air temperature using the altitude. When the first standby air data system 148 does receive input from the navigation system 142, the first standby air data system 148, determines the static air temperature using the navigation information via the first particular implementation described above, the second particular implementation described above associated with FIG. 4 or FIG. 5, or another implementation that utilizes the navigation system input to determine the static air temperature, and data stored in the memory 156.

The method 600, at block 612, includes determining the TAS based on the corrected Mach number and the static air temperature. For example, the first standby air data system 148 calculates the TAS using an appropriate equation for the TAS based on the corrected Mach number. The method 600, at block 614, includes providing output to flight computer(s), where the output includes the corrected Mach number and the static air temperature. For example, the first standby air data system 148 provides output to the flight computer(s) 124, which includes the corrected Mach number, the altitude, the static air temperature, the TAS, the standby flag value, and other data generated by the first primary air data system 146. The standby flag value indicates that the output is provided by a standby air data system 148 that uses an estimated static air temperature rather than a static air temperature based on temperature input from one of the total air temperature sensors 116.

The method 600, at block 616, includes determining whether to use the output. For example, the flight computer(s) 124 determine whether to use the output based on values of the primary fault flags. When the determination is to use the output, the method 600, at block 618, includes using the output received from the standby air data system. For example, a particular flight computer 124 using the output provides the output to the flight systems 132 to allow the flight management system 136 to present flight condition data to the pilot(s), allows other flight systems 132 (e.g., the autopilot system 138 or the autothrottle system 140) to control operation of the aircraft 100, or both. Presentation of the output may be adjusted (e.g., emphasized by change of one or more display characteristics, presented with an associated legend, etc.) based on the standby flag to indicate that output based on static air temperature is based on an estimated static air temperature rather than a value determined from temperature input from one of the total air temperature sensor(s) 116. When the determination is to not use the output, the method 600, at block 620, includes ignoring the output. The method 600 repeats for newly obtained corrected static pressure input and total pressure input, and the method is performed for each primary air data system 146.

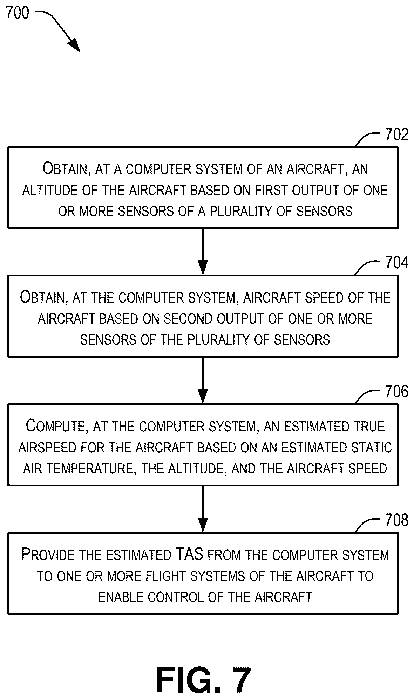

FIG. 7 depicts a flowchart of a method 700 of providing an estimated true airspeed for an aircraft based on an estimated static air temperature without utilizing temperature sensor input. In some implementations, the computer system 104 of FIG. 1 performs the method 700. The computer system 104 includes the flight computer(s) 124, the primary air data system(s) 146, the standby air data systems 148, or combinations thereof. The method 700, at block 702, includes obtaining, at the computer system of an aircraft, an altitude of the aircraft based on first output of one or more sensors of a plurality of sensors. For example, each of the primary air data system(s) 146 and each of the standby air data system(s) 148 determine or receive corrective static pressure input based on output from one or more static pressure sensors 120 of airstream sensors 112 of the aircraft 100.

The method 700, at block 704, includes obtaining, at the computer system, aircraft speed of the aircraft based on second output of one or more sensors of the plurality of sensors. For example, each of the primary air data system(s) 146 and each of the standby air data system(s) 148 receive total pressure input based on output from a dedicated total pressure sensor 118 of the airstream sensors 112, and each of the primary air data system(s) 146 and each of the standby air data system(s) 148 determine a corrected Mach number as an indication of speed based on received total pressure input and received corrected static pressure input. An equation used to determine the corrected Mach number is selected based on a speed regime of the aircraft 100, which is determined based on IAS determined from the received total pressure input and the received corrected static pressure input.

The method 700, at block 706, includes computing, at the computer system, an estimated true airspeed for the aircraft based on an estimated static air temperature, the altitude, and the aircraft speed. For example, each of the primary air data system(s) 146 determine whether temperature sensor input from a total air temperature sensor 116 is valid. When the temperature sensor input is not valid, each of the primary air data system(s) 146 determine an estimated static air temperature based on the altitude, based on position input including time information received from a navigation system 142, or combinations thereof, and determine the estimated TAS using the corrected Mach number and the estimated static air temperature. As another example, each of the standby air data system(s) 148 determine an estimated static air temperature based on the altitude, based on position input including time information received from a navigation system 142, or combinations thereof, and determine the estimated TAS using the corrected Mach number and the estimated static air temperature.

The method 700, at block 708, also includes providing the estimated true airspeed from the computer system to one or more flight systems of the aircraft to enable control of the aircraft. For example, each of the primary air data system(s) 146 that determined the estimated static air temperature and each of the standby air data system(s) 148 send the estimated TAS as a portion of output sent to flight computer(s) 124. The flight computer(s) 124, in response to a determination to use the estimated TAS, provide the estimated TAS to one or more display devices 106, to one or more flight systems 132 configured to control the aircraft 100 (e.g., an autopilot system 138 or an autothrottle system 140), or both to enable control of the aircraft based on the estimated TAS by pilot input, by implementation of commands generated by the one or more flight systems 132, or both. Thus, the aircraft can be controlled according to a reliable estimation of the TAS.

For example, during a flight of the aircraft 100, a pilot of the aircraft 100 engages the autopilot system 138. Subsequent to engagement of the autopilot system 138 by the pilot, the total air temperature sensor 116 that provides temperature input to the primary air data fails and, instead of determining the static air temperature based on the temperature input, the primary air data system 146 determines the estimated static air temperature without temperature input, determines the estimated TAS using the estimated static air temperature, and sends the estimated TAS to flight systems 132, which provides the estimated TAS to the autopilot system 138, which requires TAS to function. The flight systems 132 also provide notification to the pilot that the TAS is an estimated TAS, which can result in the pilot taking control back from the autopilot system 138.

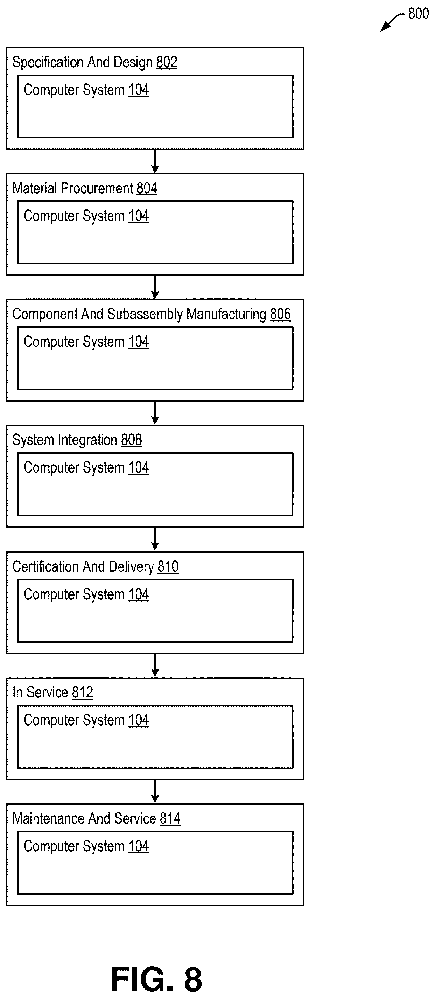

FIG. 8 is a flowchart illustrating a method 600 representing a life cycle of an aircraft 100 that includes the computer system 104, which includes the primary air data system(s) 146 and the standby air data system(s) 148. During pre-production, the method 800 in an example includes, at block 802, specification and design of the aircraft 100. During specification and design of the aircraft 100, the method 800 includes specification and design of the computer system 104, including a number of primary air data systems 146, a number of standby air data systems 148, sensor inputs for the standby air data system(s) 148, locations for each of the air data systems 146,148, and power sources for the air data systems 146, 148 and sensors providing input to the air data systems 146, 148, among other considerations. At block 804, the method 800 includes material procurement, which may include procuring the computer system 104 and other components of the aircraft 100.

During production, the method 800 includes, at block 806, component and subassembly manufacturing and, at block 808, system integration of the aircraft 100. At block 810, the method 800 includes certification and delivery of the aircraft 100 and, at block 812, placing the aircraft 100 in service. Certification and delivery may include certification of the computer system 104 to place the aircraft 100 in service. At block 814, the method 800 includes performing maintenance and service on the aircraft 100, which may include modification, reconfiguration, refurbishment, replacement, and so on, of one or more systems of the aircraft 100. Service and maintenance of the computer system 104 may include updating data used by the air data systems 146, 148 to determine static air temperature.

Each of the processes of the method 800 may be performed or carried out by a system integrator, a third party, and/or an operator (e.g., a customer). For the purposes of this description, a system integrator may include without limitation any number of aircraft manufacturers and major-system subcontractors; a third party may include without limitation any number of venders, subcontractors, and suppliers; and an operator may be an airline, leasing company, military entity, service organization, and so on.

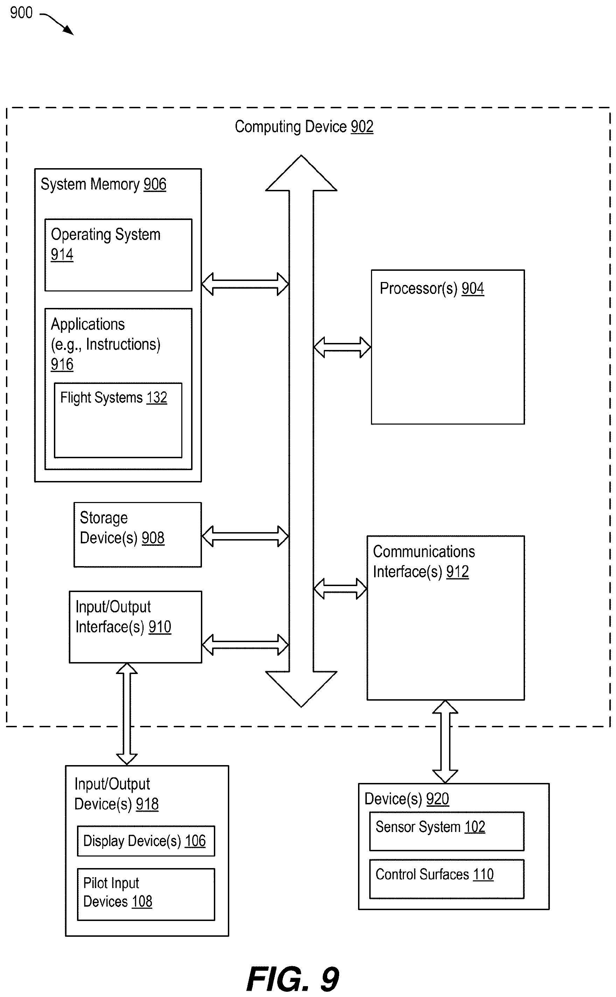

FIG. 9 is an illustration of a block diagram of a computing environment 900 including a computing device 902 configured to support implementations of computer-implemented methods and computer-executable program instructions (or code) according to the present disclosure. For example, the computing device 902, or portions thereof, may execute instructions to perform, or cause equipment to perform, operations described with reference to FIGS. 1-8. In implementations, computing device 902 is, or is a component of, the aircraft 100 including the computer system 104, the flight computers 124, and the LRUs 126.

The computing device 902 includes one or more processors 904. The processor(s) 904 communicates with a system memory 906, one or more storage devices 908, one or more input/output interfaces 910, one or more communications interfaces 912, or a combination thereof. The system memory 906 includes non-transitory computer readable media, including volatile memory devices (e.g., random access memory (RAM) devices), nonvolatile memory devices (e.g., read-only memory (ROM) devices, programmable read-only memory, and flash memory), or both. The system memory 906 includes an operating system 914, which may include a basic input/output system for booting the computing device 902 as well as a full operating system to enable the computing device 902 to interact with users, other programs, and other devices. The system memory 906 includes one or more applications 916 (e.g., instructions) which are executable by the processor 904. For example, when the computing device 902 is the computer system 104, the one or more applications 916 include the flight systems 132.

In some configurations, the processor(s) 904 communicate with the one or more storage devices 908. For example, the storage device(s) 908 include non-transitory computer readable media that can include nonvolatile storage devices, such as magnetic disks, optical disks, or flash memory devices. The storage device(s) 908 can include both removable and non-removable memory devices. The storage device(s) 908 can be configured to store an operating system, images of operating systems, applications, and program data. In particular implementations, the system memory 906, the storage device(s) 908, or both, include tangible computer-readable media incorporated in hardware and which are not signals.

In some configurations, the processor(s) 904 communicate with the one or more input/output interfaces 910 that enable the computing device(s) 902 to communicate with one or more input/output device(s) 918 (e.g., the pilot input devices 108 and the display devices 106) to facilitate user interaction. The input/output interfaces 910 can include serial interfaces (e.g., universal serial bus (USB) interfaces or Institute of Electrical and Electronics Engineers (IEEE) interfaces), parallel interfaces, display adapters, audio adapters, and other interfaces ("IEEE" is a registered trademark of The Institute of Electrical and Electronics Engineers, Inc. of Piscataway, New Jersey). The input/output devices 918 can include keyboards, pointing devices, displays (e.g., one or more monitors, one or more gauges, etc.), speakers, microphones, touch screens, rotatable selectors, levers, knobs, slides, switches, and other devices. The processor(s) 904 detect interaction events based on user input received via the input/output interfaces 910. Additionally, the processor(s) 904 send a display to one or more display devices (e.g., display devices 106) via the input/output interfaces 910.

In some configurations, the processor(s) 904 can communicate with one or more devices 920 (e.g., the control surfaces 110 and the sensors of the sensor system 102) via the one or more communications interfaces 912. The device(s) 920 can include external computing devices contacted via a communication network and controllers, sensors, actuators, and other devices coupled to the computing device(s) 902 via wired or wireless local connections. For example, when the computing device 902 is a flight computer 124, a flight system 132 of the flight computer 124 may generate one or more commands to move a rudder of the aircraft based on pilot input via a pilot input device 108 or based on execution of the autopilot system 138, and sends the command(s) to one or more hydraulic actuators that implement movement of the rudder. The one or more communications interfaces 912 may include wired Ethernet interfaces, IEEE 802 wireless interfaces, other wireless communication interfaces, one or more converters to convert analog signals to digital signals, electrical signals to optical signals, one or more converters to convert received optical signals to electrical signals, or other network interfaces.

In some implementations, a non-transitory, computer readable medium stores instructions that, when executed by one or more processors, cause the one or more processors to initiate, perform, or control operations to perform part or all of the functionality described above. For example, the instructions may be executable to implement one or more of the operations or methods described herein in association with FIGS. 1-9. In some implementations, part or all of one or more of the operations or methods described herein in association with FIGS. 1-9 may be implemented by one or more processors (e.g., one or more central processing units (CPUs), one or more graphics processing units (GPUs), one or more digital signal processors (DSPs), one or more application specific integrated circuits (ASICS), etc.) executing instructions, by dedicated hardware circuitry, or both.

Particular aspects of the disclosure are described below in sets of interrelated Examples:
According to Example 1, an aircraft includes a plurality of sensors; and a computer system configured to: obtain an altitude of the aircraft based on first output of one or more sensors of the plurality of sensors; obtain aircraft speed of the aircraft based on second output of one or more sensors of the plurality of sensors; compute an estimated true airspeed for the aircraft based on a static temperature estimate, the altitude, and the aircraft speed; and provide the estimated true airspeed to one or more flight systems of the aircraft to enable control of the aircraft.
Example 2 includes the aircraft of Example 1, wherein the static temperature estimate is a first function of altitude and is independent of input from a total air temperature sensor.
Example 3 includes the aircraft of Example 2, wherein the first function is based on world-wide temperature averages.
Example 4 includes the aircraft of any of Example 2 or Example 3, wherein the first function is a first temperature above a first height to an operating ceiling height for the aircraft, and wherein temperature increases linearly at a first rate below the first height to a second temperature.
Example 5 includes the aircraft of Example 4, wherein the first rate, the second temperature, or both, are selectable based on a time, a location of the aircraft, or both.
Example 6 includes the aircraft of Example 2, wherein the first function is a first temperature above a first height to an operating ceiling height for the aircraft, wherein temperature increases linearly at a first rate below the first height to a second height, wherein the temperature increases linearly at a second rate below the second height to a third height, and wherein the temperature increases linearly at a particular rate below a particular height to a second temperature.
Example 7 includes the aircraft of Example 2, wherein the computer system is further configured to add a correction factor to the first function, and wherein the correction factor is obtained from one or more tables based on an altitude of the aircraft, a location of the aircraft, and a time.
Example 8 includes the aircraft of any of Examples 1 to 7, wherein: the plurality of sensors comprise one or more total air temperature sensors; the computer system comprises a primary air data system configured to receive output from the one or more total air temperature sensors; and the computer system is configured to compute the estimated true airspeed responsive to a determination that output of the one or more total air temperature sensors is not valid.
Example 9 includes the aircraft of any of Examples 1 to 8, wherein the computer system comprises one or more standby air data systems, wherein the one or more standby air data systems do not receive output from one or more total air temperature sensors of the plurality of sensors, and wherein each of the one or more standby air data systems is configured to compute the estimated true airspeed.
Example 10 includes the aircraft of any of Examples 1 to 9, wherein the one or more flight systems include an autopilot system, an autothrottle system, or both.
According to Example 11, a non-transitory computer-readable medium comprising instructions, wherein the instructions are executable by one or more processors of an aircraft to cause the one or more processors to: obtain an altitude of the aircraft based on first output of one or more sensors of a plurality of sensors; obtain aircraft speed of the aircraft based on second output of one or more sensors of the plurality of sensors; compute an estimated true airspeed for the aircraft based on the altitude and the aircraft speed; and provide the estimated true airspeed to one or more flight systems of the aircraft to enable control of the aircraft.
Example 12 includes the non-transitory computer-readable medium of Example 11, wherein the one or more processors are components of a primary air data system of the aircraft.
Example 13 includes the non-transitory computer-readable medium of Example 11 or Example 12, wherein the estimated true airspeed is further based on a Mach number determined using a corrected static pressure.
According to Example 14, a method includes: obtaining, at a computer system of an aircraft, an altitude of the aircraft based on first output of one or more sensors of a plurality of sensors; obtaining, at the computer system, aircraft speed of the aircraft based on second output of one or more sensors of the plurality of sensors; computing, at the computer system, an estimated true airspeed for the aircraft based on an estimated static air temperature, the altitude, and the aircraft speed; and providing the estimated true airspeed from the computer system to one or more flight systems of the aircraft to enable control of the aircraft.
Example 15 includes the method of Example 14, wherein the estimated true airspeed is based on a static temperature estimate, and wherein the static temperature estimate is a first function of altitude and independent of input from a total air temperature sensor.
Example 16 includes the method of Example 15, wherein the one or more computer systems are configured to add a correction factor to the first function, and wherein the correction factor is obtained from one or more tables based on an altitude of the aircraft, a location of the aircraft, a time, or combinations thereof.
Example 17 includes the method of any of Examples 14 to 16, wherein the estimated true airspeed is based on a static temperature estimate, and wherein the static temperature estimate is a first function of an altitude, a location, and a time and is independent of input from a total air temperature sensor.
Example 18 includes the method of any of Examples 14 to 17, wherein said computing the estimated true airspeed is performed responsive to a determination that output of one or more total air temperature sensors is not valid.
Example 19 includes the method of any of Examples 14 to 18, wherein said computing the estimated true airspeed is performed by one or more standby air data systems of the one or more computer systems, and wherein the one or more standby air data systems do not receive output of one or more total air temperature sensors of the plurality of sensors.
Example 20 includes the method of any of Examples 14 to 19 and further includes receiving pilot input to engage an autopilot system, wherein the autopilot system functions based on the estimated true airspeed when output of one or more temperature sensors used to determine a static air temperature is not valid.

The illustrations of the examples described herein are intended to provide a general understanding of the structure of the various implementations. The illustrations are not intended to serve as a complete description of all of the elements and features of apparatus and systems that utilize the structures or methods described herein. Many other implementations may be apparent to those of skill in the art upon reviewing the disclosure. Other implementations may be utilized and derived from the disclosure, such that structural and logical substitutions and changes may be made without departing from the scope of the disclosure. For example, method operations may be performed in a different order than shown in the figures or one or more method operations may be omitted. Accordingly, the disclosure and the figures are to be regarded as illustrative rather than restrictive.

Moreover, although specific examples have been illustrated and described herein, it should be appreciated that any subsequent arrangement designed to achieve the same or similar results may be substituted for the specific implementations shown. This disclosure is intended to cover any and all subsequent adaptations or variations of various implementations. Combinations of the above implementations, and other implementations not specifically described herein, will be apparent to those of skill in the art upon reviewing the description.

The Abstract of the Disclosure is submitted with the understanding that it will not be used to interpret or limit the scope or meaning of the claims. In addition, in the foregoing Detailed Description, various features may be grouped together or described in a single implementation for the purpose of streamlining the disclosure. Examples described above illustrate but do not limit the disclosure. It should also be understood that numerous modifications and variations are possible in accordance with the principles of the present disclosure. As the following claims reflect, the claimed subject matter may be directed to less than all of the features of any of the disclosed examples. Accordingly, the scope of the disclosure is defined by the following claims and their equivalents.

## Claims

1. A method (700) comprising:
Obtaining (702), at a computer system (104) of an aircraft, an altitude (H) of the aircraft based on first output of one or more sensors of a plurality of sensors (112);
Obtaining (704), at the computer system, aircraft speed (M) of the aircraft based on second output of one or more sensors of the plurality of sensors;
Computing (706), at the computer system, an estimated true airspeed (TAS) for the aircraft based on an estimated static air temperature, the altitude, and the aircraft speed; and
Providing (708) the estimated true airspeed from the computer system to one or more flight systems (132) of the aircraft to enable control of the aircraft.

2. The method of claim 1, wherein the estimated true airspeed is based on a static temperature estimate, and wherein the static temperature estimate is a first function of altitude and independent of input from a total air temperature sensor.

3. The method of claim 2, wherein the first function is based on world-wide temperature averages.

4. The method of claim 2, wherein the first function is a first temperature above a first height to an operating ceiling height for the aircraft, and wherein temperature increases linearly at a first rate below the first height to a second temperature.

5. The method of claim 4, wherein the first rate, the second temperature, or both, are selectable based on a time, a location of the aircraft, or both.

6. The method of claim 2, wherein the first function is a first temperature above a first height to an operating ceiling height for the aircraft, wherein temperature increases linearly at a first rate below the first height to a second height, wherein the temperature increases linearly at a second rate below the second height to a third height, and wherein the temperature increases linearly at a particular rate below a particular height to a second temperature.

7. The method of claim 2, wherein the one or more computer systems are configured to add a correction factor to the first function, and wherein the correction factor is obtained from one or more tables based on an altitude of the aircraft, a location of the aircraft, a time, or combinations thereof.

8. The method of any one of claims 1 to 7, wherein the estimated true airspeed is based on a static temperature estimate, and wherein the static temperature estimate is a first function of an altitude of the aircraft, a location of the aircraft, and a time and is independent of input from a total air temperature sensor.

9. The method of any one of claims 1 to 8, wherein said computing the estimated true airspeed is performed responsive to a determination that output of one or more total air temperature sensors is not valid.

10. The method of any one of claims 1 to 9, wherein:
the plurality of sensors (112) comprise one or more total air temperature sensors (116);
the computer system comprises a primary air data system (146) configured to receive output from the one or more total air temperature sensors (116); and
the method comprises computing, at the computer system, the estimated true airspeed responsive to a determination that output of the one or more total air temperature sensors is not valid (210, 220, 222, 214).

11. The method of claim 10, further comprising providing the estimated true air speed to one or more flight computers (124) of the aircraft to enable control of the aircraft.

12. The method of any one of claims 1 to 10, wherein said computing the estimated true airspeed is performed by one or more standby air data systems (148) of the one or more computer systems, and wherein the one or more standby air data systems do not receive output of one or more total air temperature sensors of the plurality of sensors.

13. The method of any one of claims 1 to 11, further comprising receiving pilot input to engage an autopilot system (138), wherein the autopilot system functions based on the estimated true airspeed when output of one or more temperature sensors used to determine a static air temperature is not valid.

14. A non-transitory computer-readable medium (906) comprising instructions (916), wherein the instructions are executable by one or more processors (904) of an aircraft (100) to cause the one or more processors to execute a method according to any one of claims 1 to 13.

15. An aircraft (100) comprising:
a plurality of sensors (112); and
a computer system (104) configured to execute a method according to any one of claims 1 to 13.
